# EUROPEAN PATENT APPLICATION

(11) **EP 4 531 391 A1**
(43) Date of publication of application: **02.04.2025**
(21) Application number: 23810887.2
(22) Date of filing: 15.05.2023
(51) Int. Cl.: H04N 5/272, H04N 5/265, H04N 5/262, H04N 7/14

(54) **VIDEO PROCESSING METHOD AND APPARATUS, ELECTRONIC DEVICE, AND STORAGE MEDIUM**

(30) Priority: 23.05.2022 CN 202210567327
(71) Applicant: Beijing Zitiao Network Technology Co., Ltd., Beijing 100190 (CN)
(72) Inventor: LU, Zhixiong, Beijing 100028 (CN); WANG, Shengnan, Beijing 100028 (CN)
(74) Representative: Dentons UK and Middle East LLP
(86) International application number: PCT/CN2023/094315
(87) International publication number: WO 2023/226814

(57) **Abstract**

A video processing method and apparatus, an electronic device, and a storage medium. The video processing method comprises: in response to an effect triggering operation, extracting a target object in a video frame to be processed (S110); and fusing the target object with an image background plate comprising at least one image to be displayed, so as to obtain an effect video frame and display the effect video frame (S130), wherein at least one of display content and a display angle of the image background plate relative to the target object dynamically changes.

## Description

This disclosure claims priority to the Chinese patent application No. 202210567327.1 filed May 23, 2022 to China National Intellectual Property Administration, the entire contents of which are incorporated by reference into this disclosure.

### FIELD

Embodiments of the present disclosure relate to the field of video processing technology, for example, to a video processing method, apparatus, electronic device and storage medium.

### BACKGROUND

With the development of network technology, an increasing number of applications have involved in users' lives, particularly a series of software applications that allow users to shoot short videos, which are greatly favored by users.

In order to enhance the fun of video shooting, related application software can provide users with a variety of effect video production functions. However, the effect video production functions currently available to users are very limited, and the fun of the effects video finally obtained needs to be further increased. At the same time, the personalized needs of users who want to change the background picture in the video are not considered, thereby reducing the user experience.

### SUMMARY

The present disclosure provides a video processing method, apparatus, electronic device and storage medium, to achieve an effect of improving the richness of video content on the basis of satisfying personalized needs for the background picture.

In a first aspect, an embodiment of the present disclosure provides a video processing method. The method comprises:
extracting a target object in a video frame to be processed, in response to an effect triggering operation;
generating an image background plate comprising at least one image to be displayed; and
fusing the target object with the image background plate, to obtain an effect video frame and display the effect video frame;
wherein at least one of display content and a display angle of the image background plate relative to the target object dynamically changes.

In a second aspect, an embodiment of the present disclosure further provides a video processing apparatus. The video processing apparatus comprises:
an object extraction module, configured to extract a target object in a video frame to be processed in response to an effect triggering operation;
a background plate generation module, configured to generate an image background plate comprising at least one image to be displayed; and
a video generation module, configured to fuse the target object with the image background plate, to obtain an effect video frame and display the effect video frame;
wherein at least one of display content and a display angle of the image background plate relative to the target object dynamically changes.

In a third aspect, an embodiment of the present disclosure further provides an electronic device. The electronic device comprises:
one or more processors; and
a storage device for storing one or more programs,
wherein when the one or more programs are executed by the one or more processors, the one or more processors implement the video processing method according to any of the embodiments of the present disclosure.

In a fourth aspect, an embodiment of the present disclosure further provides a storage medium containing computer executable instructions, wherein the computer executable instructions, when executed by a computer processor, perform the video processing method according to any of the embodiments of the present disclosure.

### BRIEF DESCRIPTION OF THE DRAWINGS

In conjunction with the accompanying drawings and with reference to the following specific implementations, the above and other features, advantages, and aspects of various embodiments of the present disclosure will become more apparent. Throughout the accompanying drawings, the same or similar reference numerals indicate the same or similar components. It should be understood that the accompanying drawings are illustrative, and elements and components are not necessarily drawn to scale.
FIG. 1 is a schematic flowchart of a video processing method provided by an embodiment of the present disclosure.
FIG. 2 is a schematic diagram of the effect of an effect video frame provided by an embodiment of the present disclosure.
FIG. 3 is a schematic flowchart of a video processing method provided by an embodiment of the present disclosure.
FIG. 4 is a schematic structural diagram of a video processing apparatus provided by an embodiment of the present disclosure.
FIG. 5 is a schematic structural diagram of an electronic device provided by an embodiment of the present disclosure.

### DETAILED DESCRIPTION OF EMBODIMENTS

The following will describe embodiments of the present disclosure with reference to the accompanying drawings. Although certain embodiments of the present disclosure are shown in the accompanying drawings, it should be understood that the present disclosure may be implemented in various forms, and these embodiments are provided for a more thorough and complete understanding of the present disclosure. It should be understood that the accompanying drawings and embodiments of the present disclosure are for exemplary purposes only.

It should be understood that the various steps described in the method implementations of the present disclosure may be performed in different orders and/or in parallel. In addition, the method implementations may include additional steps and/or omit the steps shown.

The term "comprising" and its variations as used herein are open-ended, meaning "including but not limited to". The term "based on" means "at least partially based on". The term "an embodiment" means "at least one embodiment"; the term "another embodiment" means "at least one additional embodiment"; and the term "some embodiments" means "at least some embodiments". Relevant definitions of other terms will be provided in the following description.

It should be noted that the concepts of "first", "second", etc. mentioned in the present disclosure are only used to distinguish different devices, modules or units.

It should be noted that the modifiers "a" or "an" and "multiple" mentioned in the present disclosure are illustrative. Those skilled in the art should understand that unless explicitly stated otherwise in the context, they should be understood as "one or more".

The names of messages or information exchanged between multiple devices in the implementations of the present disclosure are for illustrative purposes only.

It can be understood that before using the technical solutions disclosed in the embodiments of the present disclosure, the type, scope of use, and usage scenarios of personal information involved in the present disclosure should be informed to the user in an appropriate manner in accordance with relevant laws and regulations, and the user's authorization should be obtained.

For example, in response to receiving an active request from a user, a prompt message will be sent to the user to explicitly inform the user that the operation requested to be performed will require the acquisition and use of the user's personal information. Thus, the user can autonomously choose whether or not to provide personal information to software or hardware such as an electronic device, application, server or storage medium that performs the operation of the technical solution of the present disclosure based on the prompt message.

As an optional implementation, in response to receiving an active request from a user, the form of sending a prompt message to the user may be, for example, a pop-up window, in which the prompt message may be presented in text. In addition, the pop-up window may also carry a selection control for the user to choose "agree" or "disagree" to provide personal information to the electronic device.

It can be understood that the above notification and the process of obtaining user authorization are only illustrative, and other forms that meet relevant laws and regulations may also be applied to the implementation of the present disclosure.

It can be understood that the data involved in the technical solution (including the data itself, the acquisition or use of the data) shall comply with the requirements of corresponding laws and regulations as well as relevant rules.

Before introducing the technical solution, an exemplary description of the application scenarios of the embodiments of the present disclosure may be provided. In an example, when a user shoots a video through application software or engages in a video call with other users, the user might wish that the video shot is more interesting; at the same time, the user might have personalized needs for the picture of the effect video, for example, some users wish to replace the background in the video picture with specific content; at the time, according to the technical solution of this embodiment, the background image in the video shooting process may be determined, and then the background image and the target object are fused to generate an effect video, so that the effect video picture presents an effect of fusion of the target object and the background plate. The background plate may be generated based on a video frame that has been uploaded or shot in advance. In other words, the background plate is based on the stitching of multiple images, that is, it can be understood as an existing photo wall.

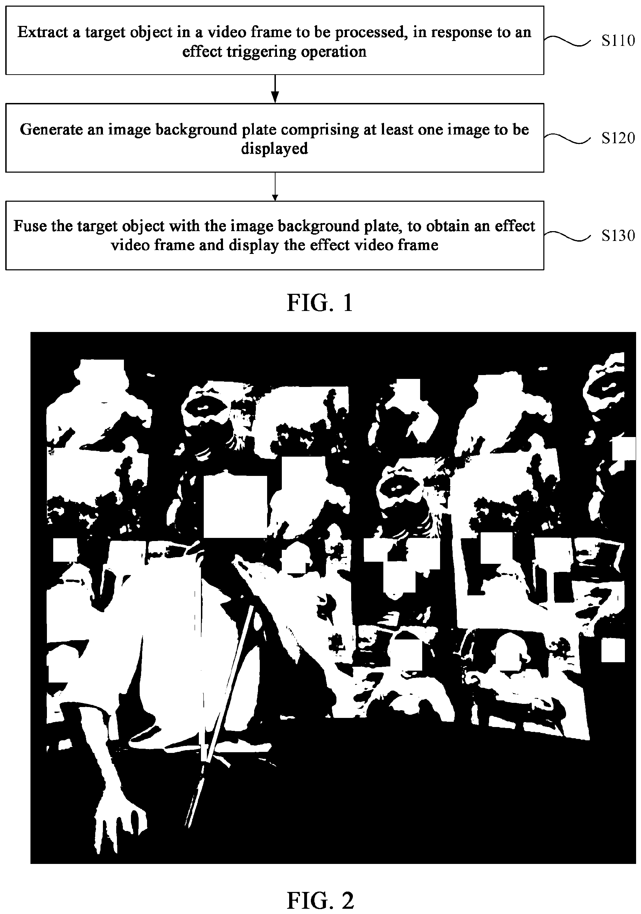

FIG. 1 is a schematic flowchart of a video processing method provided by an embodiment of the present disclosure. The embodiment of the present disclosure is applicable to a case of generating effect videos. The method may be executed by a video processing apparatus, which may be implemented in the form of software and/or hardware. Optionally, it is implemented by an electronic device, which may be a mobile terminal, a PC or a server, etc. As shown in FIG. 1, the method comprises the following steps.

At S110, a target object in a video frame to be processed is extracted in response to an effect triggering operation.

Therein, the apparatus for executing the effect video determination method provided by the embodiment of the present disclosure may be integrated in application software supporting the effect video processing function, and the software may be installed into an electronic device; optionally, the electronic device may be a mobile terminal or a PC terminal, etc. The application software may be a type of software for processing images/videos, and the specific application software may be used as long as it can realize image/video processing. The application software may also be a specially developed application program to realize the software for adding effects and displaying effects, or it can be integrated in a corresponding page, and the user may realize the processing of effect videos through the page integrated in the PC terminal.

It should be noted that the technical solution of this embodiment may be executed in the process of real-time video recording by the mobile terminal, or it may be executed after the system receives the video data actively uploaded by the user. For example, when the user shoots a video in real time by the camera device on the terminal device, the application software detects the effect triggering operation, and then it may respond to the operation, thereby acquiring the uploaded image and processing the video currently shot by the user to obtain an effect video. Alternatively, when the user actively uploads image data through the application software and performs an effect trigger operation, the application will also respond to the operation, and then process the image data actively uploaded by the user after acquiring the uploaded image, thereby obtaining an effect video.

In the embodiment of the present disclosure, the effect triggering operation includes at least one of the following: triggering a shooting control corresponding to the effect video production; monitoring voice information including an effect adding instruction; and detecting that the display interface includes a facial image.

In an embodiment, a control for triggering and running an effect video production program may be pre-developed in the application software, and the control is an effect video production control; based on this, when the application detects that the user triggers the control, the effect video production program may be run to process the uploaded image being acquired. Alternatively, voice information is collected by a microphone array deployed on the terminal device, and the voice information is analyzed and processed. If the processing result includes the vocabulary of effect video processing, it means that the function of performing effect processing on the current video is triggered. The advantage of determining whether to perform effect video processing based on the content of the voice information is that it avoids the interaction between the user and the display page and improves the smartness of effect video processing. Another implementation may be to determine whether the user's facial image is included in the field of view according to the shooting field of view of the mobile terminal. When the user's facial image is detected, the application software may use the event of detecting the facial image as a trigger operation for effect processing of the video. Those skilled in the art should understand that the specific event selected as the condition for effect video processing may be set according to actual conditions.

Usually, the application software is installed on the terminal device, and the terminal device is provided with a camera device. After responding to the effect triggering operation, a video or image may be shot by the camera device or the application software. If a video shooting control is turned on, a video may be shot by the camera device, and each frame shot is used as a video frame to be processed. At the time, the video frame to be processed may include a target object. The target object may be either dynamic or static. At the same time, the number of the target objects may be one or more. For example, multiple specific users may be used as target objects. Based on this, when the application recognizes the facial features of one or more specific users from the real-time video picture based on a pre-trained image recognition model, the effect video processing process of the embodiment of the present disclosure may be executed. All objects in the picture may also be used as target objects. The target object in the video frame may be acquired by using the cutout technique, or the target object in the video frame to be processed may be extracted by using a limb torso recognition method. In an embodiment, when the application acquires the video shot by the user in real time and identifies the target object from the picture, the video may be parsed to obtain the video frame to be processed corresponding to the current moment. Optionally, the view corresponding to the target object is extracted from the video frame to be processed by a pre-written cutout program. Those skilled in the art should understand that cutout is a processing operation that separates an image or video from a part of the original image or video frame to obtain a separate layer. In this embodiment, the view obtained by the cutout process is the image corresponding to the target object.

On the basis of the implementations above, after the image shooting control is triggered, the real-time video frame may be shot by the camera device, and when it is detected that the preset conditions are met, the target object in the video frame to be processed is extracted, and the effect video is determined based on the video frame to be processed and the effect video frame subsequently fused.

Optionally, the video frame to be processed corresponding to the current scene is shot. When it is detected that the effect display condition is met, the video frame to be processed is shot continuously to extract the target object in the video frame to be processed.

Therein, the current scene may be the scene where the target object is currently located, and the effect display condition may be that the duration of continuous shooting of the video frame to be processed reaches a preset duration threshold.

In an example, when the triggering of the image shooting control is detected, the video frame to be processed corresponding to the current scene may be shot. When it is detected that the countdown on the current display interface is "1", the video frame to be processed may be continued to be shot, and the target object in the video frame to be processed may be extracted, so as to fuse the target object with the image background to obtain an effect video frame.

Optionally, when the duration of continuous shooting of the current scene reaches a preset shooting duration threshold, or when audio data is acquired and a voice wake-up word is included in the audio data, it indicates that the target object in the video frame to be processed needs to be extracted. Alternatively, when the target object in the video frame to be processed triggers a preset body movement, it indicates that the target object in the video frame to be processed needs to be extracted.

At S120, an image background plate comprising at least one image to be displayed is generated.

Therein, the number of the images to be displayed includes multiple, and one or more photo walls may be generated based on the images to be displayed, and one or more photo walls may be used as image background plates. The images to be displayed may be the video frames to be processed which are shot by the camera device, or pre-shot images, or downloaded images. For example, they may be images taken by a camera device and stored in an image gallery or an image storage library, or they may be images downloaded from the Internet. For example, if a user likes a certain actor very much, he can download the image corresponding to the actor, and generate an image background plate, and then fuse the image with the image background plate, to obtain a corresponding effect video frame.

In this embodiment, before generating the image background plate comprising at least one image to be displayed, the method further comprises: jumping to an image resource library to determine at least one image to be displayed from the image resource library and upload it, so as to determine the image background plate based on the at least one image to be displayed.

Therein, the image to be displayed may be an image actively uploaded by the user. For example, when the user triggers the image upload control, the application software may be triggered to access the image gallery on the mobile terminal or the application software may be triggered to access the cloud image gallery associated with it, and then the uploaded image is determined based on the user's selection. Alternatively, when the user triggers the image upload control, the application software may be triggered to access the relevant interface of the mobile terminal camera device, thereby acquiring the image captured by the camera device and using this image as the image to be displayed.

In an example, when the user uses the camera device of the mobile terminal to shoot a video in real time and triggers the image upload box displayed in the display interface, the application software may automatically open the "album" in the mobile terminal according to the user's triggering operation on the image upload box, and display the image in the "album" on the display interface. When the user's triggering operation on a certain image is detected, it means that the user wants to use the image as the background of the effect video, that is, the stitched image in the image background plate. Optionally, the image selected by the user will be uploaded to the server or client corresponding to the application software, so that the application software will make an image background plate based on the uploaded image. Alternatively, when the user uses the camera device of the mobile terminal to shoot a video in real time and triggers the image upload box displayed in the display interface, the application software may directly acquire the video frame at the current moment in the video shot by the camera device in real time, and use the video frame as the image to be displayed.

In this embodiment, the images to be displayed may be stitched to obtain an image background plate including at least one image to be displayed, so as to achieve the effect of fusion of the target object and the background image. Determining the image background plate may be: performing layout processing on the at least one image to be displayed based on at least one image layout, to obtain at least one background plate to be displayed, wherein the at least one image layout is preset and/or pre-uploaded; and determining the image background plate based on the at least one background plate to be displayed.

Therein, the image layout can be understood as how the images to be displayed should be arranged. It can be understood that there is a wall, and users can use a certain arrangement approach to post images on the wall. The adopted arrangement approach is used as the image layout. The image layout may include multiple types, and the user may arbitrarily select one or more layouts from the multiple layouts. Alternatively, the client or the server automatically selects the number of the image layouts according to the number of the images to be displayed. Alternatively, the client or server may automatically generate an image layout corresponding to the image to be displayed based on the image to be displayed, and arrange the corresponding image to be displayed based on this image layout. The background plate to be displayed is a background plate obtained after the image to be displayed is processed in layout based on the image layout. The number of the background plates to be displayed corresponds to the number of the determined image layouts. The same image to be displayed may be arranged based on different image layouts, that is one image to be displayed may appear in different background plates to be displayed. Each background plate to be displayed may be used as an image background plate, or each background plate to be displayed may be stitched together to obtain the image background plate.

It should be noted that the image layout may be pre-set or pre-uploaded by the user, which realizes the effect of automatically determining the display position of the image to be displayed based on the layout, and improves the convenience of determining the background plate to be displayed.

Next, a detailed explanation of how to determine the background plate to be displayed based on the image layout will be provided. Optionally, the image layout includes multiple horizontal grids and vertical grids for placing the images to be displayed. The performing layout processing on the at least one image to be displayed based on at least one image layout, to obtain at least one background plate to be displayed comprises:
determining the horizontal grid and vertical grid corresponding to the at least one image to be displayed according to the shooting mode of the at least one image to be displayed; and determining at least one image to be laid out corresponding to the at least one image to be displayed according to a cropping ratio corresponding to the image shooting mode, and performing layout processing on the at least one image to be displayed to obtain the at least one background plate to be displayed.

Therein, the horizontal grid and the vertical grid are comparative terms, and are mainly determined by the horizontal and vertical ratio of the grid. For example, when the horizontal and vertical ratio is greater than or equal to 1, it may be called a horizontal grid, and when the horizontal and vertical ratio is less than 1, it may be called a vertical grid. That is, an image layout may include multiple horizontal grids or multiple vertical grids. The image to be displayed may be aligned with the horizontal or vertical grid for arrangement. The image to be displayed may be directly filled according to the ratio corresponding to the horizontal and vertical grids to obtain the background plate to be displayed. In order to improve the fusion degree between each image to be displayed and the corresponding grid in the background plate to be displayed, the background plate to be displayed may be determined based on the shooting mode of each image to be displayed.

It should be noted that the shooting mode may include horizontal screen shooting mode and vertical screen shooting mode, and the display effect of the image to be displayed is different for different shooting modes. The image to be displayed which is shot in the horizontal screen shooting mode may be correspondingly displayed in the horizontal arrangement grid, and the image to be displayed which is shot in the vertical screen shooting mode may be correspondingly displayed in the vertical arrangement grid, so as to achieve a complete overlap of the image to be displayed and the corresponding grid, and avoid the problem of black edges of the grids and resulting in poor display effects.

In practical applications, there is a problem that the shooting mode of the image to be displayed is not completely matched with the grid type, or even if the image to be displayed is arranged in the corresponding grid, the problem of black edges may also appear. The image to be displayed may be further processed so that the image to be displayed may be fully adapted to the grid in the image layout, to obtain a better background plate effect.

Optionally, at least one image to be laid out corresponding to the at least one image to be displayed is determined according to a cropping ratio corresponding to a shooting mode. And the at least one image to be laid out is placed in a corresponding vertical arrangement grid or horizontal arrangement grid respectively, to obtain a background plate to be displayed corresponding to the image layout.

It can be understood that after determining the shooting mode, the cropping ratio corresponding to the image to be displayed may be determined based on the corresponding shooting mode and the ratio information of the horizontal and vertical grids, and then the corresponding image to be displayed is cropped based on the cropping ratio, and the cropped image to be displayed is used as the image to be laid out. Each image to be laid out may be placed in the corresponding vertical arrangement grid or horizontal arrangement grid to obtain the background plate to be displayed corresponding to the image layout.

In an embodiment, determining the image background plate based on the at least one background plate to be displayed may be specifically: determining a display interface size for the at least one background plate to be displayed, to determine the image background plate based on the display interface size, or performing circular stitching on the at least one background plate to be displayed to obtain the image background plate.

It can be understood that each background plate to be displayed may be used as the image background plate. According to the display size of the display interface, the display ratio of the image background plate in the display interface may be determined, and then the corresponding image background plate is adjusted based on the display ratio. Alternatively, circular stitching may be performed on each background plate to be displayed to obtain a circular or semicircular image background plate. Alternatively, each background plate to be displayed may be embedded in a preset 3D surround model to obtain a rotatable image background plate.

It should also be noted that in the process of displaying the image background plate, in order to have a better display effect, the background plate to be displayed may be displayed on the display interface in a loop, or the image background plate may be played surrounding the background image plate at a certain rate.

At S130, the target object is fused with the image background plate, to obtain an effect video frame and display it.

In an example, referring to FIG. 2, the image background plate may be displayed as a background image, and the target object may be displayed as a foreground image.

It should be noted that, in each video frame, the display content of the image background plate and the display angle of the image background plate relative to the target object can be variable.

In this embodiment, fusing the target object with the image background plate may include: updating, based on information about relative distance between the target object and a display interface, a display size of the image background plate in the display interface; and fusing the target object with the image background plate of the updated display size, to obtain the effect video frame. In practical applications, the front camera or the rear camera may be used to shoot the corresponding video frames to be processed. When the shooting mode is different, the relative display distance between the target object and the display interface is different, and the display size of the background image in the display interface may be determined based on the relative display distance. Then, the target object is fused with the corresponding image background plate to obtain an effect video frame.

In practical applications, fusing the target object with the image background plate may further include: determining a scaling ratio of the target object according to a display size of the image background plate; and fusing the target object with the image background plate according to the scaling ratio to obtain the effect video frame.

It can be understood that in order to achieve a better fusion effect between the target object and the image background plate, the target object may be shrunk or enlarged according to the display size of the image background plate to achieve a natural fusion effect and obtain a corresponding effect video frame.

In an embodiment, the image background plate is played in a loop on the display interface. For example, the number of the image background plates is multiple, and the display time of each image background plate may be set. When the display time of each image background plate reaches the preset display time threshold, a next image background plate is displayed. The above image background plates may be played in a loop, and the target objects in the video frames to be processed are fused together to obtain effect video frames.

In order to avoid blank screen and poor user experience during the switching of the image background plates, when switching the image background plate, a corresponding transition effect may be set. For example, the transition effect may be a fade-in and fade-out of the image background plate, or it may be playing a preset animation effect to fill the display interface when switching to the next image background plate, thereby improving the user's viewing experience. When switching image background plates, transition effects are displayed to display the next image background plate based on the transition effects.

In an embodiment, the image background plate may also be a surround background plate obtained by stitching a plurality of background plates to be displayed. At this time, fusing the target object with the image background plate, to obtain the effect video frame may include: determining curvature information of the surround background plate, and determining a scaling ratio of the target object based on the curvature information; and fusing the target object with the surround background plate based on the scaling ratio, to obtain the effect video frame.

Therein, the curvature information may be the rotation rate of the tangent direction angle of a certain point or a certain region on a curved surface to the arc length, which can be understood as the degree of curvature of the circular image background plate. The scaling ratio can be determined based on the curvature information and the distance of the target object relative to the image background plate, or the distance information of the target object corresponding to the center point of the surround background plate, to perform image fusion based on the scaling ratio, so as to achieve a good fusion of the target object with the background information, thereby improving the realism of the effect image.

It can be understood that in order to fuse the target object with the image background plate, the curvature information of the surround background plate may be acquired. Based on the curvature information, the optimal display position of the target object on the display interface may be determined. The scaling ratio by which target object can be scaled may be determined based on the optimal display position.

When displaying the corresponding image background plate, in order to create picture of a visual impact, it can be determined which image to be displayed needs to be enlarged in each image background plate, or which video to be displayed needs to be enlarged, or alternatively, the images in the image background plate are enlarged and displayed in the center position in sequence.

It can be understood that a target enlarged display image in the image background plate is determined, in the process of displaying the image background plate, to enlarge and display the target enlarged display image. The target enlarged display image may be any image in the image background plate, or it may be an image at the center position of the image background plate. When enlarged and displayed, the enlarged display image may be enlarged and displayed at the center position of the image background plate.

In order to further increase the sense of technology, in the process of obtaining and displaying the effect video frame, a mirror plane corresponding to the image background plate in the display interface is determined, to display a mirror image of the image background plate based on the mirror plane. The mirror plane corresponds to a plane perpendicular to the lower edge of the image background plate in the display interface. The advantage of determining the mirror plane is that the reflection of the image background plate may be displayed, which improves the richness of the picture content. At the same time, the surround image background plate may be rotated according to the preset rotation rate.

Based on the above, it can be seen that both the looping image background plate and the surround image background plate can be displayed in a preset manner.

In this embodiment, when the application detects an operation to stop effect video shooting, it will no longer execute the above processing steps of the embodiments of the present disclosure. The operation to stop effect video shooting comprises at least one of the following: detecting the triggering of a stop shooting control; detecting that the shooting duration of the effect video has reached a preset shooting duration, detecting the triggering of a wake-up word to stop shooting; and detecting the triggering of a gesture to stop shooting. The above conditions are explained separately below.

Optionally, for the above-mentioned first operation to stop the effect video shooting, a control may be developed in the application software in advance, and at the same time, the program that terminates the effect video processing is associated with the control, and the control is the stop shooting control. Based on this, when it is detected that the user triggers the control, the application software can call the relevant program to terminate the processing operation of each video frame to be processed at the current moment and after the current moment. It can be understood that there are many forms for the user to trigger the control. In an example, when the client is installed and deployed on a PC, the user may trigger the stop shooting control by clicking the mouse. When the client is installed and deployed on a mobile terminal, the user may trigger the stop shooting control by finger touch. Those skilled in the art should understand that the specific touch control form may be selected according to the actual situation.

For the above-mentioned second operation to stop the effect video shooting, the application may preset a time period as the preset shooting duration, and record the time period of the user shooting the video. Optionally, the recording result is compared with the preset shooting duration. When it is determined that the user shooting duration has reached the preset shooting duration, the processing operation of each video frame to be processed at the current moment and after the current moment may be terminated.

For the above-mentioned third operation to stop the effects video shooting, specific information may be preset in the application software as a wake-up word for stopping shooting. For example, one or more of the words "stop", "stop shooting", "stop processing" and the like may be used as the wake-up word for stopping shooting. Based on this, when the application software receives the voice information sent by the user, it may use the pre-trained voice recognition model to recognize the voice information and determine whether the recognition result contains one or more of the preset effect loading wake-up words. When the determination result is yes, the application may terminate the processing operation of each video frame to be processed at the current moment and after the current moment.

For the above-mentioned fourth operation to stop the effects video shooting, the action information of multiple people may be recorded in the application software, and the action information may be used as preset action information. For example, the information reflecting the action of a person raising both hands is used as preset action information. Based on this, when the application receives images or videos actively uploaded by the user or collected in real time by the camera device, the images or pictures in each video frame may be recognized based on the pre-trained body action information recognition algorithm. When the recognition result shows that the body action information of the target object in the current picture is consistent with the preset action information, the application may terminate the processing operation of each video frame to be processed at the current moment and after the current moment.

It should be noted that the above effect loading conditions may become effective in the application software at the same time, or only one or more of them may be selected to become effective in the application software.

In the embodiment of the present disclosure, after extracting the target object in the video frame to be processed in response to the effect triggering operation and generating the image background plate comprising at least one image to be displayed, the target object may be fused with the image background plate to obtain an effect video frame and display it until an operation to stop the effect video shooting is received. This solves the problem in the related art that the effect video content cannot meet the personalized needs of users, resulting in poor video content and poor user experience, and achieves the effect of generating an image background plate based on the image to be displayed selected by the user and meeting the personalized display of the background image, which can improve the attractiveness of the application software to users and thus improve the effect of user stickiness. In an embodiment, in order to further improve the fun and picture sense of the effect video, the target object may be frozen and displayed in the image background plate in response to detecting that the target object meets the freeze-display condition, to obtain an effect video frame.

Therein, the freeze-display condition may be that the target object triggers the target action. For example, the target action may be a hand in hand action, a hand heart action, a hug action, a kiss action, etc. It may also be that the target object triggers a corresponding freeze wake-up word. Alternatively, a timing device and a set task are provided, and when the preset timing duration is reached, the set task is triggered, and the set task is to freeze and display the target object in the effect video frame.

Optionally, when the freeze-display condition is met, the target object at the moment the freeze-display condition is being met may be shown during the playback of the image background plate, thereby enhancing the visual appeal of the video.

It should also be noted that in the process of generating effect videos, the edges of the video picture may also be cropped according to the shooting mode of the effect video, for example, the front mode or the rear mode, so that the video picture covers the entire display interface. Alternatively, the display ratio of the effect video on the display interface is determined according to a certain ratio.

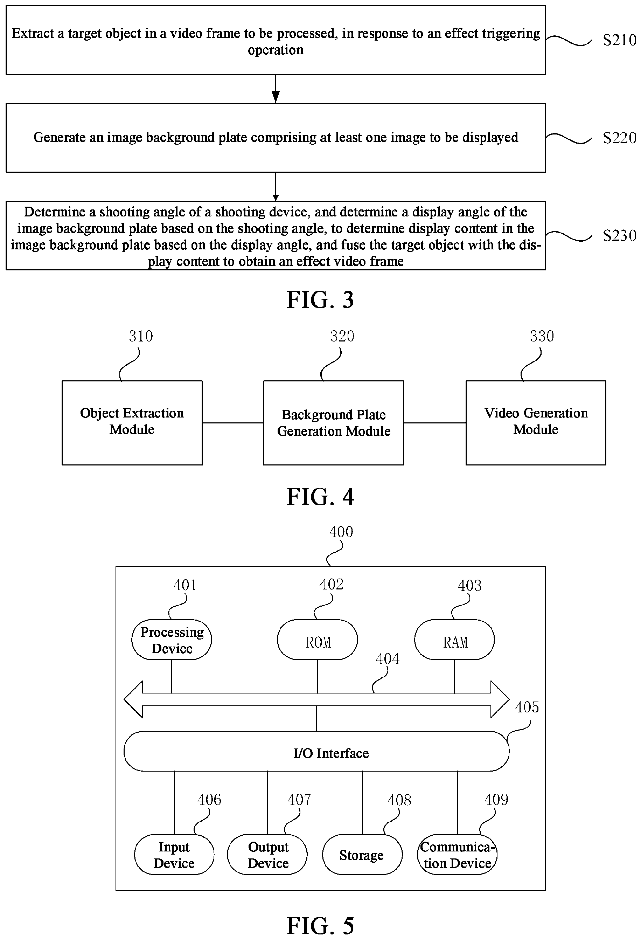

FIG. 3 is a schematic flowchart of a video processing method provided by an embodiment of the present disclosure. Based on the previous embodiments, it can be understood that the image background plate may be displaying according to the set display mode. In order to allow the image background plate to change with the shooting angle of the terminal device, thereby further enhancing the interactivity between the video picture and the user, the shooting angle of the shooting terminal may be obtained in real-time or periodically during the process of fusing the target object with the image background plate, and then the display information of the image background plate is determined based on the shooting angle to enhance the interactive effect between the screen content and the user. The specific implementation thereof may refer to the detailed description of this technical solution, where the same or corresponding terms as in the above embodiments will not be repeated here.

As shown in FIG. 3, the method comprises:
S210, extracting a target object in a video frame to be processed, in response to an effect triggering operation;
S220, generating an image background plate comprising at least one image to be displayed; and
S230, determining a shooting angle of a shooting device, and determining a display angle of the image background plate based on the shooting angle, to determine display content in the image background plate based on the display angle, and fusing the target object with the display content, to obtain an effect video frame.

In order to further enhance the intelligence effect, the display information of the image background plate may be determined based on the shooting angle of the camera device. The camera device, which is the built-in camera of the terminal device, may acquire the rotation angle information of the camera device to determine the information in the displayed image background plate.

In other words, the image background plate may be displayed dynamically or statically on the display interface. If it is displayed dynamically, the display information of the image background plate may be determined in conjunction with the shooting angle of the camera device during the playback of the image background plate according to a preset playback effect. If the image background plate is displayed statically on the display interface, the display information of the image background plate may be determined based on the real-time or periodic shooting angle of the camera device, thereby obtaining an effect video frame.

Optionally, a current video shooting mode is acquired in response to the display content of the image background plate being determined based on a camera shooting angle, a scene angle to be adjusted corresponding to the image background plate is determined based on the current shooting mode and a current shooting angle of a shooting device; and a target scene angle is determined based on the scene angle to be adjusted and an initial scene angle, to determine a display angle of the image background based on the target scene angle.

Therein, the angle information of the shooting device may be determined based on the gyroscope set in the terminal device, and the gyroscope may acquire three sets of data eulerX, eulerY, and eulerZ of the terminal device, and the three sets of data respectively represent the angles in the coordinate axis directions in three directions. When shooting the effect video for the first time, the three sets of data acquired are used as the initial scene angles. The current shooting mode may be understood as a front shooting mode or a rear shooting mode, and based on different shooting modes, the corresponding function may be used to determine the corresponding scene angle. That is, the scene angle to be adjusted is the angle corresponding to the image background plate. The scene angle to be adjusted is the angle corresponding to the image background plate which is obtained after the current scene shooting angle is processed based on the corresponding function. It should be noted that the current shooting mode may include a front shooting mode and a rear shooting mode, and different shooting modes have different ways of determining the scene angle to be adjusted. Next, it will be explained respectively how each of the two shooting modes determines the scene angle to be adjusted.

Optionally, a first direction angle and a second direction angle of the current shooting angle are inverted, in response to the current shooting mode being a front shooting mode, to obtain the scene angle to be adjusted corresponding to the image background plate.

Therein, the first direction angle, the second direction angle and the third direction angle are comparative terms, and the X-axis direction is used as the first direction, the Y-axis direction is used as the second direction, and the Z-axis direction is used as the third direction according to the world coordinate system. Correspondingly, the angles corresponding to respective directions are used as the first direction angle, the second direction angle and the third direction angle. In an example, if the current shooting mode is the front shooting mode, the current shooting angles are recorded as eulerX, eulerY, eulerZ, then the scene angles to be adjusted may be:
neweulerX=-eulerX;
neweulerY=-eulerY; and
neweulerZ=eulerZ;
where neweulerX is the first direction angle of the scene angle to be adjusted, neweulerY is the second direction angle in the scene angle to be adjusted, and neweulerZ is the third direction angle in the scene angle to be adjusted.

Optionally, an angle range of the first direction angle of the current shooting angle is determined, in response to the current shooting mode being a rear shooting mode. The first angle to be adjusted is determined based on an objective function corresponding to the angle range. The scene angle to be adjusted is determined based on the first angle to be adjusted and another direction angle of the current shooting angle.

In an example, the picture taken when the eulerX of the rear camera is 0 is usually the same as the picture taken when the eulerX of the front camera is 15, and the pictures taken when eulerX are 90 and 270 (where the camera is placed horizontally) should be guaranteed to remain unchanged to ensure that the user's perception will not be wrong. Therefore, a linear mapping may be made for eulerX. For example, if 270<eulerX<360, the first direction angle of the scene angle to be adjusted may be determined based on this formula newEulerX =(eulerX-270)/90×105+270. If 0<eulerX<90, newEulerX =eulerX/90*75+15, and the first direction angle of the scene angle to be adjusted is obtained. For the second direction angle and the third direction angle in the scene angle to be adjusted, their values are the same as the collected data.

The advantage of determining the scene angle to be adjusted by the above approach is that the display content of the image background plate that is most suitable for the current shooting mode may be determined according to the shooting mode.

After obtaining the corresponding scene angle to be adjusted based on the above approach, it is also necessary to adapt to the initial shooting angle of the shooting device, that is, the terminal device. Optionally, determining the target scene angle based on the scene angle to be adjusted and the initial scene angle may be: determining, based on the initial scene angle, an ideal scene angle and a second angle to be adjusted of the scene angle to be adjusted, a target angle corresponding to the second angle to be adjusted; and determining the target scene angle based on other angles to be adjusted and the target angle.

It can be understood that the scene angle to be adjusted should be adjusted in combination with the initial angle of the terminal device and the ideal initial angle of each image to be adjusted, to obtain the target scene angle of the display image background plate.

In an example, the ideal initial angle idealEulerY is known, and the initial angle startEulerY is recorded at the initial time of the prop. The target scene angle may be determined based on the following formula:
neweulerX=neweulerX;
neweulerY=neweulerY-startEulerY+idealEulerY; and
neweulerZ=neweulerZ.

Substituting the respective direction angles in the scene angle to be adjusted determined above into the above formula, the angles in respective directions in the updated target scene angle may be obtained. Based on the target scene angle, the display content in the image background plate may be determined and displayed.

On the basis of the above technical solution, it also comprises: playing preset audio effects during the playback of effect video frames.

It can be understood that there may be background sound effects during the playback of effect video frames. For example, the background sound effect may be background music, and the background music may be determined from the image content of each image to be displayed in the image background plate. For example, if the image content of the image to be displayed is mainly children, the background music that may be played may be a nursery rhyme. If the content of the image to be displayed is mainly two target objects, and the relationship between the target objects is relatively close, another type of background music may be played. Alternatively, the user may set the background music according to actual needs.

Based on the technical solution provided by the embodiment of the present disclosure, on the basis of making a photo wall, the corresponding target object may also be integrated to achieve the technical effect of enriching the video content.

In the method provided by the embodiment of the present disclosure, if the display content in the image background plate corresponds to the shooting angle of the device on the terminal, the shooting angle and shooting mode of the terminal device may be acquired in real time or periodically, and the target scene angle corresponding to the shooting angle may be determined, and then the corresponding image background plate may be displayed based on the target scene angle, so that the video display content may change with the user's perspective, further improving the effect of matching the video content with the user.

FIG. 4 is a schematic structural diagram of a video processing apparatus provided by an embodiment of the present disclosure. As shown in FIG. 4, the apparatus comprises: an object extraction module 310, a background plate generation module 320, and a video generation module 330.

Therein, the object extraction module 310 is configured to extract a target object in a video frame to be processed in response to an effect triggering operation. The background plate generation module 320 is configured to generate an image background plate comprising at least one image to be displayed. The video generation module 330 is configured to fuse the target object with the image background plate, to obtain an effect video frame and display the same until an operation to stop the effect video shooting is received; wherein at least one of display content and/or a display angle of the image background plate relative to the target object dynamically changes.

In an embodiment, the background plate generation module comprises:
a generation unit for the background plate to be displayed, configured to perform layout processing on the at least one image to be displayed based on at least one image layout, to obtain at least one background plate to be displayed, wherein the at least one image layout is preset and/or pre-uploaded; and
a background plate generation unit, configured to determine the image background plate based on the at least one background plate to be displayed.

In an embodiment, the image layout includes a horizontal grid and a vertical grid for placing the image to be displayed, and the generation unit for the background plate to be displayed comprises:
a determination subunit for an image to be laid out, configured to determine at least one image to be laid out corresponding to the at least one image to be displayed according to a cropping ratio corresponding to a shooting mode; and
a background plate determination subunit, configured to place the at least one image to be laid out in a corresponding vertical grid or horizontal grid respectively, to obtain a background plate to be displayed corresponding to the image layout.

In an embodiment, the background plate generation unit is configured to determine the image background plate based on the at least one background plate to be displayed by:
determining a display interface size for displaying the at least one background plate to be displayed, to determine the image background plate based on the display interface size; or
performing circular stitching on the at least one background plate to be displayed, to obtain the image background plate.

In an embodiment, the object extraction module is further configured to, prior to extracting the target object in the video frame to be processed:
shoot the video frame to be processed corresponding to the current scene; and
shooting continuously the video frame to be processed to extract the target object in the video frame to be processed, in response to detecting that the effect display condition is met.

In an embodiment, the video generation module comprises:
a display size determination unit, configured to update, based on information about relative distance between the target object and a display interface, a display size of the image background plate in the display interface; and
a video frame determination unit, configured to fuse the target object with the image background plate of the updated display size, to obtain an effect video frame.

In an embodiment, the video generation module comprises:
a ratio determination unit, configured to determine a scaling ratio of the target object according to the display size of the image background plate; and
a video frame determination unit, configured to fuse the target object with the image background plate according to the scaling ratio, to obtain the effect video frame.

In an embodiment, the apparatus further comprises: a cyclically display module, configured to cyclically display the image background plate according to the cyclically display duration of the image background plate, wherein the number of the image background plates is consistent with the number of the image layouts.

In an embodiment, the apparatus further comprises: a transition effect processing module, configured to display the transition effect when switching the image background plate, so as to display the next image background plate based on the transition effect.

In an embodiment, the apparatus further comprises: an image detection module, configured to freeze and display the target object in the image background plate, in response to detecting that the target object meets the freeze-display condition, thereby obtaining the effect video frame.

In an embodiment, the image background plate is a surround background plate obtained by stitching a plurality of background plates to be displayed, and the video generation module comprises:
a ratio determination unit, configured to determine curvature information of the surround background plate, and determine a scaling ratio of the target object based on the curvature information; and
a video frame generation unit, configured to fuse the target object with the surround background plate based on the scaling ratio, to obtain the effect video frame.

In an embodiment, the apparatus further comprises: an image enlargement display module, configured to determine a target enlarged display image in the image background plate, in the process of displaying the image background plate, to enlarge and display the target enlarged display image.

In an embodiment, the apparatus further comprises: a mirror processing module, configured to determine a mirror plane corresponding to the image background plate in the display interface, to display a mirror image of the image background plate based on the mirror plane.

In an embodiment, the apparatus further comprises:
a shooting mode determination module, configured to acquire a current video shooting mode in response to the display content of the image background plate being determined based on a camera shooting angle;
a determination module for a scene angle to be adjusted, configured to determine a scene angle to be adjusted corresponding to the image background plate based on the current shooting mode and a current shooting angle of a shooting device; and
a target scene angle determination module, configured to determine a target scene angle based on the scene angle to be adjusted and an initial scene angle, to determine a display angle of the image background based on the target scene angle.

In an embodiment, the shooting mode determination module is further configured to invert a first direction angle and a second direction angle in the current shooting angle in response to the current shooting mode being a front shooting mode, to obtain the scene angle to be adjusted corresponding to the image background plate.

In an embodiment, the shooting mode determination module is further configured to determine an angle range of the first direction angle of the current shooting angle, in response to the current shooting mode being a rear shooting mode; determine the first angle to be adjusted based on an objective function corresponding to the angle range; and determine the scene angle to be adjusted based on the first angle to be adjusted and another direction angle of the current shooting angle.

In an embodiment, the target scene angle determination module is configured to determine the target scene angle based on the scene angle to be adjusted and the initial scene angle by determining, based on the initial scene angle, an ideal scene angle and a second angle to be adjusted of the scene angle to be adjusted, a target angle corresponding to the second angle to be adjusted; and determining the target scene angle based on another angle to be adjusted and the target angle.

In the technical solution provided by the embodiment of the present disclosure, after extracting the target object in the video frame to be processed in response to the effect triggering operation and generating the image background plate comprising at least one image to be displayed, the target object may be fused with the image background plate to obtain an effect video frame and display it until an operation to stop the effect video shooting is received. This solves the problem in the related art that the effect video content cannot meet the personalized needs of users, resulting in poor video content and poor user experience, and achieves the effect of generating an image background plate based on the image to be displayed selected by the user and meeting the personalized display of the background image, which can improve the attractiveness of the application software to users and thus improve the effect of user stickiness. The video processing apparatus provided by the embodiment of the present disclosure can execute the video processing method provided in any embodiment of the present disclosure, and has corresponding functional modules and beneficial effects for executing the method.

It is worth noting that the various units and modules included in the above-mentioned apparatus are only divided according to functional logic, and the specific division is sufficient as long as the corresponding functions can be realized. In addition, the specific names of the functional units are only for the convenience of distinguishing each other.

FIG. 5 is a schematic structural diagram of an electronic device provided by an embodiment of the present disclosure. Referring to FIG. 5 below, it shows a schematic structural diagram of an electronic device (such as a terminal device or server in FIG. 5) 400 suitable for implementing the embodiment of the present disclosure. The terminal device in the embodiment of the present disclosure may include a mobile phone, a laptop computer, a digital broadcast receiver, a personal digital assistant (PDA), a portable android device (PAD), a portable multimedia player (PMP), a vehicle-mounted terminal (such as a vehicle-mounted navigation terminal), etc., and a fixed terminal such as a digital television (television, TV), a desktop computer, etc. The electronic device shown in FIG. 5 is only an example.

As shown in FIG. 5, the electronic device 400 may comprise a processing device (e.g., a central processing unit, a graphics processing unit, etc.) 401, which may perform various appropriate actions and processes according to a program stored in a read-only memory (ROM) 402 or a program loaded from a storage 408 to a random access memory (RAM) 403. Various programs and data required for the operation of the electronic device 400 are also stored in the RAM 403. The processing device 401, the ROM 402, and the RAM 403 are connected to each other via a bus 404. An input/output (I/O) interface 405 is also connected to the bus 404.

Generally, the following devices may be connected to the I/O interface 405; input devices 406 including, for example, a touch screen, touch pad, keyboard, mouse, camera, microphone, accelerometer, gyroscope, etc.; output devices 407 including, for example, a liquid crystal display (LCD), speaker, vibrator, etc.; storage 408 including, for example, magnetic tapes, hard disks, etc.; and a communication device 409. The communication device 409 may allow the electronic device 400 to perform wireless or wired communication with other devices to exchange data. Although FIG. 5 illustrates an electronic device 400 having various components, it should be understood that it is not required to implement or include all the illustrated components. Alternatively, it may implement or include more or fewer components.

In particular, according to an embodiment of the present disclosure, the process described above with reference to the flowchart may be implemented as a computer software program. For example, an embodiment of the present disclosure includes a computer program product comprising a computer program carried on a non-transitory computer-readable medium, and the computer program contains program code for executing the method shown in the flowchart. In such an embodiment, the computer program may be downloaded and installed from a network via the communication device 409, or installed from the storage 408, or installed from the ROM 402. When the computer program is executed by the processing device 401, the above-mentioned functions in the method of the embodiment of the present disclosure are executed.

The names of the messages or information exchanged between multiple devices in the implementations of the present disclosure are for illustrative purposes only.

The electronic device provided by the embodiment of the present disclosure and the video processing method provided by the above embodiments belong to the same inventive concept. The technical details not described in detail in the present embodiment can be referred to the above embodiments, and the present embodiment has the same beneficial effects as the above embodiments.

An embodiment of the present disclosure provides a computer storage medium on which a computer program is stored, and the program implements the video processing method provided by the above embodiments when executed by the processor.

It should be noted that the above-mentioned computer-readable medium of the present disclosure may be a computer-readable signal medium or a computer-readable storage medium or any combination of the above. The computer-readable storage medium may be, for example, an electrical, magnetic, optical, electromagnetic, infrared, or semiconductor system, apparatus or device, or any combination of the above. The computer-readable storage medium may include: an electrical connection with one or more wires, a portable computer disk, a hard disk, a RAM, a ROM, an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, apparatus, or device. Furthermore, in the present disclosure, a computer-readable signal medium may include a data signal propagated in a baseband or as part of a carrier wave, which carries a computer-readable program code. Such propagated data signals may take a variety of forms, including electromagnetic signals, optical signals, or any suitable combination of the above. A computer-readable signal medium may also be any computer-readable medium other than a computer-readable storage medium, which may send, propagate, or transmit a program for use by or in combination with an instruction execution system, apparatus, or device. The program code contained on the computer-readable medium may be transmitted using any appropriate medium, including: wires, optical cables, radio frequencies (RF), etc., or any suitable combination of the above.

In some implementations, the client and the server may communicate using any currently known or future developed network protocol such as the HyperText Transfer Protocol (HTTP), and may be interconnected with digital data communications (e.g., communication networks) of any form or medium. Examples of communication networks include local area networks (LAN), wide area networks (WAN), internets (e.g., the Internet), and peer-to-peer networks (e.g., ad hoc peer-to-peer networks), as well as any currently known or future developed networks.

The above-mentioned computer-readable medium may be included in the above-mentioned electronic device, or it may exist separately without being assembled into the electronic device.

The above-mentioned computer-readable medium carries one or more programs. When the above-mentioned one or more programs are executed by the electronic device, the electronic device is caused to:
extract a target object in a video frame to be processed, in response to an effect triggering operation;
generate an image background plate comprising at least one image to be displayed; and
fuse the target object with the image background plate, to obtain an effect video frame and display the effect video frame;
wherein at least one of display content and a display angle of the image background plate relative to the target object dynamically changes.

The computer program code for performing the operations of the present disclosure may be written in one or more programming languages or a combination thereof. These programming languages include object-oriented programming languages such as Java, Smalltalk, C++, and conventional procedural programming languages such as the "C" language or similar programming languages. The program code may be executed entirely on the user's computer, partly on the user's computer, as a standalone software package, partly on the user's computer and partly on a remote computer, or entirely on a remote computer or server. In the case of remote computers, the remote computer may be connected to the user's computer through any type of network, including a local area network (LAN) or a wide area network (WAN), or it may be connected to an external computer (for example, through the Internet using an Internet Service Provider).

The flowcharts and block diagrams in the accompanying drawings illustrate the possible architecture, functions, and operations of the systems, methods, and computer program products according to various embodiments of the present disclosure. In this regard, each block in the flowchart or block diagram may represent a module, a program segment, or a portion of a code, which contains one or more executable instructions for implementing a specified logical function. It should also be noted that in some alternative implementations, the functions marked in the blocks may also occur in a different order than that marked in the accompanying drawings. For example, two blocks represented in succession may actually be executed substantially in parallel, and they may sometimes be executed in the opposite order, depending on the functions involved. It should also be noted that each block in the block diagram and/or flowchart, and the combination of blocks in the block diagram and/or flowchart, may be implemented by a dedicated hardware-based system that performs the specified function or operation, or may be implemented by a combination of dedicated hardware and computer instructions.

The units involved in the embodiments described in the present disclosure may be implemented by software or by hardware. Therein, the name of the unit may be set according to the actual situation in some cases. For example, the first acquisition unit may also be described as a "unit for acquiring at least two Internet Protocol addresses".

The functions described above herein may be performed at least in part by one or more hardware logic components. For example, exemplary types of hardware logic components that can be used include: Field Programmable Gate Array (FPGA), Application Specific Integrated Circuit (ASIC), Application Specific Standard Parts (ASSP), System on Chip (SOC), Complex Programming Logic Device (CPLD), etc.

In the context of the present disclosure, a machine-readable medium may be a tangible medium that may contain or store a program for use by or in conjunction with an instruction execution system, apparatus, or device. The machine-readable medium may be a machine-readable signal medium or a machine-readable storage medium. The machine-readable medium may include an electronic, magnetic, optical, electromagnetic, infrared, or semiconductor system, apparatus, or device, or any suitable combination of the foregoing. The machine-readable storage medium may include an electrical connection based on one or more wires, a portable computer disk, a hard disk, RAM, ROM, an erasable programmable read-only memory (EPROM or flash memory), an optical fiber, a CD-ROM, an optical storage device, a magnetic storage device, or any suitable combination of the foregoing.

According to one or more embodiments of the present disclosure, [Example 1] provides a video processing method. The method comprises:
extracting a target object in a video frame to be processed in response to an effect triggering operation;
generating an image background plate comprising at least one image to be displayed; and
fusing the target object with the image background plate, to obtain an effect video frame and display the effect video frame, until an operation to stop the effect video shooting is received.

According to one or more embodiments of the present disclosure, [Example 2] provides a video processing method. The method comprises:
optionally, the generating the image background plate comprising the at least one image to be displayed comprises:
performing layout processing on the at least one image to be displayed based on at least one image layout, to obtain at least one background plate to be displayed, wherein the at least one image layout is preset and/or pre-uploaded; and
determining the image background plate based on the at least one background plate to be displayed.

According to one or more embodiments of the present disclosure, [Example 3] provides a video processing method. The method comprises:
optionally, the image layout includes a horizontal grid and a vertical grid for placing the image to be displayed, and
the performing the layout processing on the at least one image to be displayed based on the at least one image layout, to obtain the at least one background plate to be displayed comprises:
   determining at least one image to be laid out corresponding to the at least one image to be displayed according to a cropping ratio corresponding to a shooting mode; and
   placing the at least one image to be laid out in a corresponding vertical grid or horizontal grid respectively, to obtain a background plate to be displayed corresponding to the image layout.

According to one or more embodiments of the present disclosure, [Example 4] provides a video processing method. The method comprises:
optionally, the determining the image background plate based on the at least one background plate to be displayed comprises:
determining a display interface size for displaying the at least one background plate to be displayed, to determine the image background plate based on the display interface size; or
performing circular stitching on the at least one background plate to be displayed, to obtain the image background plate.

According to one or more embodiments of the present disclosure, [Example 5] provides a video processing method. The method comprises:
optionally, prior to extracting the target object in the video frame to be processed, it further comprises:
shooting the video frame to be processed corresponding to a current scene; and
shooting continuously the video frame to be processed to extract the target object in the video frame to be processed, in response to detecting that an effect display condition is met.

According to one or more embodiments of the present disclosure, [Example 6] provides a video processing method. The method comprises:
optionally, the fusing the target object with the image background plate, to obtain the effect video frame comprises:
updating, based on information about relative distance between the target object and a display interface, a display size of the image background plate in the display interface; and
fusing the target object with the image background plate of the updated display size, to obtain the effect video frame.

According to one or more embodiments of the present disclosure, [Example 7] provides a video processing method. The method comprises:
optionally, the fusing the target object with the image background plate, to obtain the effect video frame comprises:
determining a scaling ratio of the target object according to a display size of the image background plate; and
fusing the target object with the image background plate according to the scaling ratio, to obtain the effect video frame.

According to one or more embodiments of the present disclosure, [Example 8] provides a video processing method. The method comprises:
optionally, in the process of fusing the target object with the image background plate, it further comprises:
cyclically displaying the image background plate according to a cyclic display duration of the image background plate.

According to one or more embodiments of the present disclosure, [Example 9] provides a video processing method. The method comprises:
optionally, in the process of cyclically displaying the image background plate, it further comprises:
displaying a transition effect when switching the image background plate, to display a next image background plate based on the transition effect.

According to one or more embodiments of the present disclosure, [Example 10] provides a video processing method. The method comprises:
optionally, freezing and displaying the target object in the image background plate, in response to detecting that the target object meets a freeze-display condition, to obtain the effect video frame.

According to one or more embodiments of the present disclosure, [Example 11] provides a video processing method. The method comprises:
optionally, the image background plate is a surround background plate obtained by stitching a plurality of background plates to be displayed, and the fusing the target object with the image background plate, to obtain the effect video frame comprises:
determining curvature information of the surround background plate, and determining a scaling ratio of the target object based on the curvature information; and
fusing the target object with the surround background plate based on the scaling ratio, to obtain the effect video frame.

According to one or more embodiments of the present disclosure, [Example 12] provides a video processing method. The method comprises:
optionally, determining a target enlarged display image in the image background plate, in the process of displaying the image background plate, to enlarge and display the target enlarged display image.

According to one or more embodiments of the present disclosure, [Example 13] provides a video processing method. The method comprises:
optionally, determining a mirror plane, to display a mirror image of the image background plate based on the mirror plane.

According to one or more embodiments of the present disclosure, [Example 14] provides a video processing method. The method comprises:
optionally, acquiring a current video shooting mode, in response to the display content of the image background plate being determined based on a camera shooting angle;
determining a scene angle to be adjusted corresponding to the image background plate based on a current shooting mode and a current shooting angle of a shooting device; and
determining a target scene angle based on the scene angle to be adjusted and an initial scene angle, to determine a display angle of the image background based on the target scene angle.

According to one or more embodiments of the present disclosure, [Example 15] provides a video processing method. The method comprises:
optionally, the determining the scene angle to be adjusted corresponding to the image background plate based on the current shooting mode and the current shooting angle of the shooting device comprises:
inverting a first direction angle and a second direction angle of the current shooting angle, in response to the current shooting mode being a front shooting mode, to obtain the scene angle to be adjusted corresponding to the image background plate.

According to one or more embodiments of the present disclosure, [Example 16] provides a video processing method. The method comprises:
optionally, the determining the scene angle to be adjusted corresponding to the image background plate based on the current shooting mode and the current shooting angle of the shooting device comprises:
determining an angle range of a first direction angle of the current shooting angle, in response to the current shooting mode being a rear shooting mode; determining a first angle to be adjusted based on an objective function corresponding to the angle range; and determining the scene angle to be adjusted based on the first angle to be adjusted and another direction angle of the current shooting angle.

According to one or more embodiments of the present disclosure, [Example 17] provides a video processing method. The method comprises:
optionally, the determining the target scene angle based on the scene angle to be adjusted and the initial scene angle comprises:
determining, based on the initial scene angle, an ideal scene angle and a second angle to be adjusted of the scene angle to be adjusted, a target angle corresponding to the second angle to be adjusted; and
determining the target scene angle based on another angle to be adjusted and the target angle.

According to one or more embodiments of the present disclosure, [Example 18] provides a video processing apparatus. The apparatus comprises:
optionally, an object extraction module, configured to extract a target object in a video frame to be processed in response to an effect triggering operation;
a background plate generation module, configured to generate an image background plate comprising at least one image to be displayed; and
a video generation module, configured to fuse the target object with the image background plate, to obtain an effect video frame and display the effect video frame, until an operation to stop the effect video shooting is received.

Additionally, although the operations are depicted in a specific order, this should not be construed as requiring these operations to be performed in the specific order shown or in sequential order. Under certain circumstances, multitasking and parallel processing may be advantageous. Certain features described in the context of separate embodiments may also be implemented in combination in a single embodiment. Conversely, various features described in the context of a single embodiment may also be implemented individually or in any suitable sub-combination in multiple embodiments.

## Claims

1. A video processing method, comprising:
extracting a target object in a video frame to be processed, in response to an effect triggering operation;
generating an image background plate comprising at least one image to be displayed; and
fusing the target object with the image background plate, to obtain an effect video frame and display the effect video frame;
wherein at least one of display content and a display angle of the image background plate relative to the target object dynamically changes.

2. The method according to claim 1, wherein generating the image background plate comprising the at least one image to be displayed comprises:
performing layout processing on the at least one image to be displayed based on at least one image layout, to obtain at least one background plate to be displayed, wherein the at least one image layout is preset and/or pre-uploaded, and the image to be displayed is determined from an image resource library; and
determining the image background plate based on the at least one background plate to be displayed.

3. The method according to claim 2, wherein the image layout comprises a horizontal grid and a vertical grid for placing the image to be displayed, and
wherein performing the layout processing on the at least one image to be displayed based on the at least one image layout, to obtain the at least one background plate to be displayed comprises:
determining at least one image to be laid out corresponding to the at least one image to be displayed according to a cropping ratio corresponding to a shooting mode; and
placing the at least one image to be laid out in a corresponding vertical grid or horizontal grid respectively, to obtain a background plate to be displayed corresponding to the image layout.

4. The method according to claim 2, wherein determining the image background plate based on the at least one background plate to be displayed comprises:
determining a display interface size for displaying the at least one background plate to be displayed, to determine the image background plate based on the display interface size; or
performing circular stitching on the at least one background plate to be displayed, to obtain the image background plate.

5. The method according to claim 1, further comprising prior to extracting the target object in the video frame to be processed:
shooting the video frame to be processed corresponding to a current scene; and
shooting continuously the video frame to be processed to extract the target object in the video frame to be processed, in response to detecting that an effect display condition is met.

6. The method according to claim 1, wherein fusing the target object with the image background plate, to obtain the effect video frame comprises:
updating, based on information about relative distance between the target object and a display interface, a display size of the image background plate in the display interface; and
fusing the target object with the image background plate of the updated display size, to obtain the effect video frame.

7. The method according to claim 1, wherein fusing the target object with the image background plate, to obtain the effect video frame comprises:
determining a scaling ratio of the target object according to a display size of the image background plate; and
fusing the target object with the image background plate according to the scaling ratio, to obtain the effect video frame.

8. The method according to claim 1, further comprising in a process of fusing the target object with the image background plate:
cyclically displaying the image background plate according to a cyclic display duration of the image background plate.

9. The method according to claim 8, further comprising in a process of cyclically displaying the image background plate:
displaying a transition effect when switching the image background plate, to display a next image background plate based on the transition effect.

10. The method according to claim 1, further comprising:
freezing and displaying the target object in the image background plate in response to detecting that the target object meets a freeze-display condition, to obtain the effect video frame.

11. The method according to claim 1, wherein the image background plate is a surround background plate obtained by stitching a plurality of background plates to be displayed, and
wherein fusing the target object with the image background plate, to obtain the effect video frame comprises:
determining curvature information of the surround background plate, and determining a scaling ratio of the target object based on the curvature information; and
fusing the target object with the surround background plate based on the scaling ratio, to obtain the effect video frame.

12. The method according to claim 1, further comprising:
determining a target enlarged display image in the image background plate, in a process of displaying the image background plate, to enlarge and display the target enlarged display image.

13. The method according to claim 1, further comprising:
determining a mirror plane corresponding to the image background plate in the display interface, to display a mirror image of the image background plate based on the mirror plane.

14. The method according to claim 1, further comprising:
acquiring a current video shooting mode, in response to the display content of the image background plate being determined based on a camera shooting angle;
determining a scene angle to be adjusted corresponding to the image background plate based on a current shooting mode and a current shooting angle of a shooting device; and
determining a target scene angle based on the scene angle to be adjusted and an initial scene angle, to determine a display angle of the image background based on the target scene angle.

15. The method according to claim 14, wherein determining the scene angle to be adjusted corresponding to the image background plate based on the current shooting mode and the current shooting angle of the shooting device comprises:
inverting a first direction angle and a second direction angle of the current shooting angle, in response to the current shooting mode being a front shooting mode, to obtain the scene angle to be adjusted corresponding to the image background plate.

16. The method according to claim 14, wherein determining the scene angle to be adjusted corresponding to the image background plate based on the current shooting mode and the current shooting angle of the shooting device comprises:
determining an angle range of a first direction angle of the current shooting angle, in response to the current shooting mode being a rear shooting mode; determining a first angle to be adjusted based on an objective function corresponding to the angle range; and determining the scene angle to be adjusted based on the first angle to be adjusted and another direction angle of the current shooting angle.

17. The method according to claim 14, wherein determining the target scene angle based on the scene angle to be adjusted and the initial scene angle comprises:
determining, based on the initial scene angle, an ideal scene angle and a second angle to be adjusted of the scene angle to be adjusted, a target angle corresponding to the second angle to be adjusted; and
determining the target scene angle based on another angle to be adjusted and the target angle.

18. A video processing apparatus, comprising:
an object extraction module, configured to extract a target object in a video frame to be processed in response to an effect triggering operation;
a background plate generation module, configured to generate an image background plate comprising at least one image to be displayed; and
a video generation module, configured to fuse the target object with the image background plate, to obtain an effect video frame and display the effect video frame;
wherein at least one of display content and a display angle of the image background plate relative to the target object dynamically changes.

19. An electronic device, comprising:
one or more processors; and
a storage device for storing one or more programs,
wherein when the one or more programs are executed by the one or more processors, the one or more processors implement the video processing method according to any of claims 1 to 17.

20. A storage medium containing computer executable instructions, wherein the computer executable instructions, when executed by a computer processor, implement the video processing method according to any of claims 1 to 17.
